# EUROPÄISCHE PATENTANMELDUNG

(11) **EP 1 010 765 A1**
(43) Veröffentlichungstag der Anmeldung: **21.06.2000**
(21) Anmeldenummer: 99123016.0
(22) Anmeldetag: 19.11.1999
(51) Int. Cl.: C21C 1/02, C21C 7/064

(54) **Entschwefelungsmittel**

(30) Priorität: 15.12.1998 DE 19857733
(71) Anmelder: ALMAMET GmbH, 83404 Ainring (DE)
(72) Erfinder: Rhomberg, Alexander, 5020 Salzburg (AT); Sittard, Matthias, 46325 Borken (DE); Young, James, Poland, 44514 Ohio (US)
(74) Vertreter: Manitz, Finsterwald & Partner

(57) **Zusammenfassung**

Die Erfindung betrifft feinkörnige, fluidisierte Mittel zur Entschwefelung von flüssigen Eisenschmelzen mittels pneumatischem Einblasen durch Monoinjektion auf Basis von technischem Calciumcarbid oder Magnesium oder Kalk oder technischem Calciumcarbid mit Magnesium oder Kalk mit Magnesium oder durch Koinjektion auf Basis von technischem Calciumcarbid und Magnesium oder auf Basis von Kalk und Magnesium. Die Mittel enthalten einen bei der Aluminiumherstellung anfallenden Reststoff, der zu mindestens 95 Gew.-% aus Kohlenstoff, Aluminium, Natrium, Fluor und Calcium besteht. Durch diesen Gehalt werden die Eisenverluste in der Schlacke herabgesetzt, ohne daß die Entschwefelungswirkung beeinträchtigt wird.

## Beschreibung

Die vorliegende Erfindung betrifft feinkörnige, fluidisierte Mittel zur Entschwefelung von flüssigen Eisenschmelzen mittels pneumatischem Einblasen durch Monoinjektion auf Basis von technischem Calciumcarbid oder Magnesium oder Kalk oder deren Mischungen oder durch Koinjektion auf Basis von technischem Calciumcarbid und Magnesium, Kalk und Magnesium oder technischem Calciumcarbid und Magnesium und Kalk.

Bei der Entschwefelung von flüssigen Eisenschmelzen treten zwangsläufig Eisenverluste auf, da Eisen in der Schlacke eingeschlossen wird. In der Vergangenheit sind umfangreiche Untersuchungen durchgeführt worden, um die Eisenverluste in der Schlacke zu verringern. So sind zum Beispiel Entschwefelungsmitteln Soda und/oder Flußspat zugesetzt worden. Die Zumischung von Flußspat hat jedoch den Nachteil, daß die Entschwefelungswirkung herabgesetzt wird, so daß mehr Entschwefelungsmittel eingesetzt werden muß. Gleiches gilt für Soda, wenn es Magnesium enthaltenden Entschwefelungsmitteln zugesetzt wird. Soda und Flußspat haben ferner den Nachteil, daß sie die feuerfeste Auskleidung der Pfannen angreifen, was zu einer Herabsetzung von deren Lebensdauer führt. Ferner ist synthetischer Kryolith als Zusatz verwendet worden. Dies ist jedoch mit Kostennachteilen verbunden und außerdem setzt auch er die Entschwefelungswirkung etwas herab.

Aufgabe der vorliegenden Erfindung ist es, Entschwefelungsmittel der eingangs genannten Art zur Verfügung zu stellen, die zu einem verringerten Eisenverlust in der Schlacke führen und kostengünstiger sind, ohne daß die Entschwefelungswirkung nennenswert beeinträchtigt wird.

Zur Lösung dieser Aufgabe wird ein feinkörniges, fluidisiertes Mittel zur Entschwefelung von flüssigen Eisenschmelzen mittels pneumatischem Einblasen durch Monoinjektion vorgeschlagen auf Basis von technischem Calciumcarbid oder Magnesium oder Kalk oder deren Mischungen, wobei das Mittel dadurch gekennzeichnet ist, daß es einen bei der Aluminiumherstellung anfallenden Reststoff enthält, der zu mindestens 95 Gew.-% aus Kohlenstoff, Aluminium, Natrium, Fluor und Calcium besteht.

Ferner wird ein feinkörniges, fluidisiertes Mittel zur Entschwefelung von flüssigen Eisenschmelzen mittels pneumatischem Einblasen durch Koinjektion vorgeschlagen auf Basis von technischem Calciumcarbid und Magnesium, Kalk und Magnesium oder technischem Calciumcarbid und Magnesium und Kalk, wobei das Mittel dadurch gekennzeichnet ist, daß das Calciumcarbid und/oder das Magnesium und/oder der Kalk einen bei der Aluminiumherstellung anfallenden Reststoff enthält, der zu mindestens 95 Gew.-% aus Kohlenstoff, Aluminium, Natrium, Fluor und Calcium besteht.

Bei der Aluminiumherstellung durch Elektrolyse fällt ein Reststoff an der Kathode an, auch Kathodenbruch genannt, der zu mindestens 95 Gew.-% aus Kohlenstoff, Aluminium, Natrium, Fluor und Calcium besteht. Die Zusammensetzung des Kathodenbruchs kann je nach Elektrolyseanlage und Alter der Anlage variieren. Üblicherweise enthält der Kathodenbruch 10 bis 20 Gew.-% Natrium, meist etwa 15 Gew.-%, 35 bis 65 Gew.-% Kohlenstoff, meist etwa 50 bis 55 Gew.-%, 10 bis 15 Gew.-% Aluminium, 10 bis 20 Gew.-% Fluor, meist etwa 13 bis 15 Gew.-%, und 1 bis 5 Gew.-% Calcium, meist etwa 2 Gew.-%. Wenn der Kathodenbruch durch Entfernung aus der Wanne unter Wasserzusatz erfolgt, wird er den Entschwefelungsmitteln erfindungsgemäß im vorgetrockneten Zustand zugesetzt.

Durch den Gehalt des Kathodenbruchs in den erfindungsgemäßen Entschwefelungsmitteln wird der Eisenverlust in der Schlacke deutlich herabgesetzt, und die Entschwefelungswirkung ist besser als bei den bisher verwendeten Zusätze. Ein wesentlicher Vorteil des erfindungsgemäß eingesetzten Kathodenbruchs ist, daß Calcium, Aluminium und Natrium teilweise in metallischer, freier Form darin vorliegen und dadurch unmittelbar wirksam werden können. Außerdem mußte bisher der Kathodenbruch deponiert oder aufwendig aufbereitet werden um ihn zum Beispiel als Zusatzbrennstoff verwenden zu können. Durch die vorliegende Erfindung ist es möglich, ihn direkt wiederverwenden zu können.

Die im Entschwefelungsmittel verwendete Menge dieses Reststoffes hängt einerseits vom Entschwefelungsmittel sowie andererseits von der Zusammensetzung des Reststoffes ab, die wie oben ausgeführt, erheblich variieren kann. Generell sollte der Zusatz des Reststoffes so gewählt werden, daß das Entschwefelungsmittel maximal 3 Gew.-% Natrium und maximal 3 ,Gew.-% Fluor enthält. Vorzugsweise wird die Menge des Reststoffes so gewählt, daß das Entschwefelungsmittel 0,5 bis 1,0 Gew.-% Natrium und 0,3 bis 1,0 % Fluor enthält.

Im allgemeinen liegt der Reststoffgehalt in den Mitteln zur Monoinjektion im Bereich von 0,5 bis 30 Gew.-%. Wie die folgenden Ausführungen zeigen, wird jedoch vorzugsweise differenziert je nach der Basis des Entschwefelungsmittels.

Ist das erfindungsgemäße Entschwefelungsmittel ein Mittel auf Basis von technischem Calciumcarbid, so enthält es etwa 1 bis 25 Gew.-% und vorzugsweise 3 bis 15 Gew.-% Reststoff. Bei diesem Mittel ist es bevorzugt, wenn die durchschnittliche Korngröße der Bestandteile <100 µm beträgt. Dieses Entschwefelungsmittel kann als weitere Komponente bis zu 50 Gew.-% Kalk, Tonerde, Schlacke aus der Aluminiumherstellung (im wesentlichen aus Tonerde und Aluminium bestehend), Calciumaluminat oder deren Mischungen zu Lasten des Calciumcarbids enthalten. Ein bevorzugter Bereich für die weitere Komponente beträgt 10 bis 30 Gew.-%. Auch die weitere Komponente weist vorzugsweise eine durchschnittliche Korngröße <100 µm auf.

Ist das erfindungsgemäße Entschwefelungsmittel ein Mittel auf Basis von Magnesium, so enthält es etwa 0,5 bis 15 Gew.-% und vorzugsweise 3 bis 10 Gew.-% Reststoff. Das Magnesium hat vorzugsweise eine durchschnittliche Korngröße im Bereich von 800 bis 200 µm und der Reststoff eine durchschnittliche Korngröße <800 µm. Besonders bevorzugt ist es, wenn die Korngrößen beider Komponenten nicht wesentlich unterschiedlich sind, um eine Entmischung zu vermeiden. Auch dieses Mittel kann die oben bereits genannten zusätzlichen Komponenten enthalten und zwar in einer Menge bis zu 60 Gew.-%, bevorzugt 30 bis 50 Gew.-%. Die zusätzlichen Komponenten gehen zu Lasten des Magnesiums. Sie weisen ebenfalls eine durchschnittliche Korngröße auf, die nicht wesentlich von der des Magnesiums abweicht.

Bei einem erfindungsgemäßen Entschwefelungsmittel mit Kalk als Basis sind etwa 0,5 bis 25 Gew.-%, vorzugsweise 3 bis 15 Gew.-%, Reststoff enthalten. Die durchschnittliche Korngröße der Kalk/Reststoff-Mischung ist vorzugsweise <150 µm. Als weitere Komponente können bis zu 50 Gew.-% Tonerde, Schlacke aus der Aluminiumherstellung, Calciumaluminat oder deren Mischungen zu Lasten des Kalkgehalts in dem Entschwefelungsmittel enthalten sein.

Das erfindungsgemäße Entschwefelungsmittel zur Monoinjektion kann auch ein Mittel auf Basis von technischem Calciumcarbid und Magnesium sein. Es enthält dann etwa 1 bis 30 Gew.-% Magnesium und 0,5 bis 15 Gew.-%, vorzugsweise 3 bis 10 Gew.-%, Reststoff. Die durchschnittliche Korngröße des Magnesiums liegt im Bereich von 800 bis 200 µm, und die durchschnittliche Korngröße des Calciumcarbids und Reststoffs ist <100 µm. Als weitere Komponente kann das Mittel Kalk, Tonerde, Schlacke aus der Aluminiumherstellung, Calciumaluminat oder deren Mischungen bis etwa 50 Gew.-%, vorzugsweise bis etwa 20 Gew.-%, zu Lasten des Calciumcarbids enthalten.

Ferner umfaßt die vorliegende Erfindung ein Mittel zur Monoinjektion auf Basis von Kalk und Magnesium. Es enthält etwa 1 bis 30 Gew.-% Magnesium und 0,5 bis 15 Gew.-%, vorzugsweise 3 bis 10 Gew.-%, Reststoff. Die durchschnittlichen Korngrößen entsprechen denen des zuvor beschriebenen Mittels auf Basis von Calciumcarbid und Magnesium. Als weitere Komponente kann das Mittel Tonerde, Schlacke aus der Aluminiumherstellung, Calciumaluminat oder deren Mischungen bis etwa 50 Gew.-%, vorzugsweise bis zu etwa 20 Gew.-%, zu Lasten des Kalks enthalten.

Bei einem Entschwefelungsmittel auf Basis von technischem Calciumcarbid, Magnesium und Kalk beträgt der Reststoffgehalt ebenfalls 0,5 bis 15 Gew.-%, vorzugsweise 3 bis 10 Gew.-%. Für die Korngrößen gilt dasselbe wie bei dem Mittel; auf Basis von technischem Calciumcarbid und Magnesium. Als weitere Komponente können Tonerde, Schlacke aus der Aluminiumherstellung, Calciumaluminat oder deren Mischungen bis etwa 20 Gew.-% zu Lasten des Calciumcarbids enthalten sein.

Zur Koinjektion sieht die vorliegende Erfindung Entschwefelungsmittel auf Basis von technischem Calciumcarbid und Magnesium, Kalk und Magnesium oder technischem Calciumcarbid, Magnesium und Kalk vor, denen der bei der Aluminiumherstellung anfallende Reststoff zugesetzt ist, der zu mindestens 95 Gew.-% aus Kohlenstoff, Aluminium, Natrium, Fluor und Calcium besteht. Der Reststoff kann dem Calciumcarbid und/oder Magnesium und/oder Kalk zugesetzt werden, das heißt er kann einer oder beiden oder allen drei Komponenten bei dem Mittel auf Basis von Calciumcarbid, Magnesium und Kalk zugesetzt werden..

Im allgemeinen liegt der Reststoffgehalt in den einzelnen Komponenten der Koinjektion im Bereich von 0,5 bis 25 Gew.-%. Es ist jedoch bevorzugt, zwischen Calciumcarbid und Kalk einerseits und Magnesium andererseits zu differenzieren, wie die folgenden Ausführungen zeigen.

Bei dem Mittel zur Koinjektion auf Basis von Calciumcarbid und Magnesium enthält das Calciumcarbid etwa 0,5 bis 25 Gew.-%, vorzugsweise 3 bis 10 Gew.-% Reststoff und das Magnesium etwa 0,5 bis 15 Gew.-%, vorzugsweise 3 bis 7 Gew.-%, Reststoff.

Dem Calciumcarbid können bis zu 50 Gew.-%, vorzugsweise 5 bis 25 Gew.-%, Kalk, Tonerde, Schlacke aus der Aluminiumherstellung, Calciumaluminat oder deren Mischungen zu Lasten des Calciumcarbids zugesetzt werden. Die Mischung aus Calciumcarbid, Reststoff und ggf. weiterer Komponente hat vorzugsweise eine durchschnittliche Korngröße von <100 µm. Die Magnesiumkomponente kann ebenfalls bis zu 50 Gew.-%, vorzugsweise 3 bis 10 Gew.-%, Kalk, Tonerde, Schlacke aus der Aluminiumherstellung, Calciumaluminat oder deren Mischungen enthalten. In der Mischung aus Magnesium, Reststoff und ggf. weiterer Komponente hat das Magnesium vorzugsweise eine durchschnittliche Korngröße im Bereich von 800 bis 200 µm und der Reststoff sowie ggf. die weitere Komponente eine durchschnittliche Korngröße <800 µm. Vorzugsweise unterscheiden sich die Korngrößen von Magnesium einerseits und Reststoff sowie weiterer Komponente nicht wesentlich.

Bei dem Mittel zur Koinjektion auf Basis von Kalk und Magnesium enthält der Kalk etwa 0,5 bis 25 Gew.-%, vorzugsweise 3 bis 10 Gew.-% Reststoff und das Magnesium etwa 0,5 bis 15 Gew.-%, vorzugsweise 3 bis 7 Gew.-%, Reststoff.

Dem Kalk können bis zu 50 Gew.-%, vorzugsweise 5 bis 25 Gew.-% Tonerde, Schlacke aus der Aluminiumherstellung, Calciumaluminat oder deren Mischungen zu Lasten des Kalkgehalts zugesetzt werden. Das Magnesium kann als weitere Komponente bis zu 50 Gew.-%, vorzugsweise 3 bis 10 Gew.-%, Kalk, Tonerde, Schlacke aus der Aluminiumherstellung, Calciumaluminat oder Mischungen zu Lasten des Magnesiumsgehalts enthalten. Die Mischung aus Kalk, Reststoff und ggf. weiterer Komponente hat vorzugsweise eine durchschnittliche Korngröße von <150 µm. Für die Mischung aus Magnesium, Reststoff und ggf. weiterer Komponente gelten bezüglich der Korngröße die obigen Ausführungen.

Bei dem Mittel zur Koinjektion auf Basis von Calciumcarbid, Magnesium und Kalk enthalten Calciumcarbid, Magnesium und Kalk die für die beiden vorstehenden Mittel genannten Mengen Reststoff. Auch in diesem Fall können den Komponenten als weitere Bestandteile Tonerde, Schlacke aus der Aluminiumherstellung, Calciumaluminat oder deren Mischungen jeweils zu Lasten des Entschwefelungsmittel zugesetzt werden.

## Patentansprüche

1. Feinkörniges, fluidisiertes Mittel zur Entschwefelung von flüssigen Eisenschmelzen mittels pneumatischem Einblasen durch Monoinjektion auf Basis von technischem Calciumcarbid oder Magnesium oder Kalk oder deren Mischungen,
dadurch gekennzeichnet,
daß es einen bei der Aluminiumherstelllung anfallenden Reststoff enthält, der zu mindestens 95 Gew.-% aus Kohlenstoff, Aluminium, Natrium, Fluor und Calcium besteht.

2. Mittel nach Anspruch 1 auf Basis von technischem Calciumcarbid,
dadurch gekennzeichnet,
daß es 1 bis 25 Gew.-% Reststoff und vorzugsweise 3 bis 15 Gew.-% Reststoff enthält.

3. Mittel nach Anspruch 2,
dadurch gekennzeichnet,
daß es eine durchschnittliche Korngröße < 100 µm aufweist.

4. Mittel nach Anspruch 2 oder 3,
dadurch gekennzeichnet,
daß es als weitere Komponente bis zu 50 Gew.-% Kalk, Tonerde, Schlacke aus der Aluminiumherstellung, Calciumaluminat oder deren Mischungen zu Lasten des technischen Calciumcarbidgehalts enthält.

5. Mittel nach Anspruch 1 auf Basis von Magnesium,
dadurch gekennzeichnet,
daß es 0,5 bis 15 Gew.-% Reststoff und vorzugsweise 3 bis 10 Gew.-% Reststoff enthält.

6. Mittel nach Anspruch 5,
dadurch gekennzeichnet,
daß das Magnesium eine durchschnittliche Korngröße im Bereich von 800 bis
200 µm und der Reststoff eine durchschnittliche Korngröße < 800 µm aufweist.

7. Mittel nach Anspruch 5 oder 6,
dadurch gekennzeichnet,
daß es als weitere Komponente bis zu 60 Gew.-% Kalk, Tonerde, Schlacke aus der Aluminiumherstellung, Callciumaluminat oder deren Mischungen zu Lasten des Magnesiumgehalts enthält.

8. Mittel nach Anspruch 7,
dadurch gekennzeichnet,
daß es 30 bis 50 Gew.-% der weiteren Komponente enthält.

9. Mittel nach Anspruch 1 auf Basis von Kalk,
dadurch gekennzeichnet,
daß es 0,5 bis 25 Gew.-% Reststoff und vorzugsweise 3 bis 15 Gew.-% Reststoff enthält.

10. Mittel nach Anspruch 9,
dadurch gekennzeichnet,
daß es eine durchschnittliche Korngröße < 150 µm aufweist.

11. Mittel nach Anspruch 9 oder 10,
dadurch gekennzeichnet,
daß es als weitere Komponente bis zu 50 Gew.-% Tonerde, Schlacke aus der Aluminiumherstellung, Calciumaluminat oder deren Mischungen zu Lasten des Kalkgehalts enthält.

12. Mittel nach Anspruch 1 auf Basis von technischem Calciumcarbid und Magnesium, Kalk und Magnesium oder technischem Calciumcarbid, Magnesium und Kalk,
dadurch gekennzeichnet,
daß es 1 bis 30 Gew.-% Magnesium und 0,5 bis 15 Gew.-% Reststoff, vorzugsweise 3 bis 10 Gew.-% Reststoff enthält.

13. Feinkörniges, fluidisiertes Mittel zur Entschwefelung von flüssigen Eisenschmelzen mittels pneumatischem Einblasen durch Koinjektion auf Basis von technischem Calciumcarbid und Magnesium, Kalk und Magnesium oder technischem Calciumcarbid, Magnesium und Kalk,
dadurch gekennzeichnet,
daß das Calciumcarbid und/oder das Magnesium und/oder der Kalk einen bei der Aluminiumherstellung anfallenden Reststoff enthält, der zu mindestens 95 Gew.-% aus Kohlenstoff, Aluminium, Natrium, Fluor und Calcium besteht.

14. Mittel nach Anspruch 13,
dadurch gekennzeichnet,
daß das Calciumcarbid 0,5 bis 25 Gew.-%, das Magnesium 0,5 bis 15 Gew.-% und der Kalk 0,5 bis 25 Gew.-% Reststoff und vorzugsweise das Calciumcarbid 3 bis 10 Gew.-%, das Magnesium 3 bis 7 Gew.-% und der Kalk 3 bis 10 Gew.-% Reststoff enthält.

15. Mittel nach einem der Ansprüche 13 oder 14,
dadurch gekennzeichnet,
daß Calciumcarbid und/oder Magnesium bis zu 50 Gew.-% als weitere Komponente Kalk, Tonerde, Schlacke aus der Aluminiumherstellung, Calciumaluminat oder deren Mischungen zu Lasten des Calciumcarbidgehalts bzw. Magnesiumgehalts enthält.

16. Mittel nach einem der Ansprüche 13 oder 14,
dadurch gekennzeichnet,
daß der Kalk als weitere Komponente bis zu 50 Gew.-% Tonerde, Schlacke aus der Aluminiumherstellung, Calciumaluminat oder deren Mischungen zu Lasten des Kalkgehalts und/oder das Magnesium und/oder das Calciumcarbid bis zu 50 Gew.-% Kalk, Tonerde, Schlacke aus der Aluminiumherstellung, Calciumaluminat oder deren Mischungen zu Lasten des Magnesiumgehalts bzw. Calciumcarbidgehalts enthält.

17. Mittel nach Anspruch 15 oder 16,
dadurch gekennzeichnet,
daß das Calciumcarbid 5 bis 25 Gew.-% der weiteren Komponente und der Kalk 5 bis 25 Gew.-% der weiteren Komponente enthält.

18. Mittel nach einem der Ansprüche 15 bis 17,
dadurch gekennzeichnet,
daß das Magnesium 3 bis 10 Gew.-% der weiteren Komponente enthält.

19. Mittel nach einem der Ansprüche 13 bis 18,
dadurch gekennzeichnet,
daß die Mischung aus Calciumcarbid und Reststoff und ggf. weiterer Komponente eine durchschnittliche Korngröße < 100 µm aufweist.

20. Mittel nach einem der Ansprüche 13 bis 18,
dadurch gekennzeichnet,
daß in der Mischung aus Magnesium, Reststoff und ggf. weiterer Komponente das Magnesium eine durchschnittliche Korngröße im Bereich von 800 bis 200 µm und der Reststoff sowie ggf. die weitere Komponente eine durchschnittliche Korngröße < 800 µm haben.

21. Mittel nach einem der Ansprüche 13 bis 18,
dadurch gekennzeichnet,
daß die Mischung aus Kalk, Reststoff und ggf. weiterer Komponente eine durchschnittliche Korngröße von < 150 µm hat.
